# EUROPEAN PATENT SPECIFICATION

(11) **EP 2 610 075 B1**
(45) Date of publication and mention of the grant of the patent: **15.02.2017**
(21) Application number: 12198826.5
(22) Date of filing: 21.12.2012
(51) Int. Cl.: B60C 9/22, B60C 11/00

(54) **Two-wheeled automotive vehicle tire**
Zweirädriger Autoreifen
Pneu de véhicule automobile à deux roues

(30) Priority: 26.12.2011 JP 2011283877
(43) Date of publication of application: 03.07.2013
(73) Proprietor: SUMITOMO RUBBER INDUSTRIES, LTD., Kobe-shi, Hyogo 651-0072 (JP)
(72) Inventor: Otani, Masafumi, Kobe-shi, Hyogo 651-0072 (JP)
(74) Representative: TBK

(56) References cited:
- EP-A1- 1 864 828
- EP-A1- 2 172 350
- US-A1- 2011 303 340

## Description

### BACKGROUND OF THE INVENTION

### Field of the Invention

The present invention relates to two-wheeled automotive vehicle tires.

### Description of the Background Art

In recent years, with enhancement of performance of two-wheeled automotive vehicles, two-wheeled automotive vehicle tires are required to enhance motion performance. In particular, in order to enhance cornering performance, enhancement of grip performance at or around a maximum camber angle is strongly required in the market. Therefore, a two-wheeled automotive vehicle tire that has a tread rubber formed such that a rubber disposed in shoulder portions has a loss tangent tanδ greater than a rubber disposed in a crown portion, so as to enhance a grip performance during cornering, has been suggested in Japanese Laid-Open Patent Publication No. 2009-35228.

Furthermore, a two-wheeled automotive vehicle tire according to the preamble of claim 1 is known from EP 2 172 350 A1. A further two-wheeled automotive vehicle tire is disclosed in US 2011/0303340 A1.

### SUMMARY OF THE INVENTION

However, in the two-wheeled automotive vehicle tire as described above, although grip performance (hereinafter, may be also referred to as "grip performance in the tire lateral direction") in the centrifugal direction is enhanced during cornering, a problem arises that a stiffness in a tire circumferential direction is reduced, and traction performance is deteriorated.

In order to address such a problem, density of cords in a band layer disposed outward of a carcass may be increased to enhance a stiffness in the tire circumferential direction. However, even if the density of cords of the band layer are simply increased, a stiffness in the tire circumferential direction is increased in the crown portion, to deteriorate ride comfort, and, further, a stiffness in the tire circumferential direction is excessively increased near a tread end, and a behavior for starting sliding of a tire for cornering is abruptly performed, to deteriorate contact performance, so that a problem that steering stability is deteriorated during cornering may arise anew.

The present invention is made in order to solve the aforementioned problems, and a main object of the present invention is to make available a two-wheeled automotive vehicle tire that enhances both grip performance and traction performance during cornering while maintaining ride comfort and steering stability.

According to the present invention, the above object is solved with a two-wheeled automotive vehicle tire having the features of claim 1.

The tread rubber of the two-wheeled automotive vehicle tire according to the present invention includes: a crown rubber portion disposed in the central region including the tire equator as its center; and a pair of shoulder rubber portions extending to tread ends on both sides lateral to the crown rubber portion in the tire axial direction, and having a loss tangent tanδ that is greater than that of the crown rubber portion. Therefore, the two-wheeled automotive vehicle tire of the present invention enables enhancement of grip performance in the tire lateral direction during cornering.

Further, in the two-wheeled automotive vehicle tire according to the present invention, the middle band portions of the band ply disposed outward of the carcass each have the density of band cords increased as compared to the density of band cords of each of the crown band portion and the shoulder band portions. The band layer thus formed enables ride comfort during straight running to be maintained by means of the crown band portion having relatively reduced ends. Further, the middle band portions having relatively increased density of band cords are disposed inward, in the tire radial direction, of the middle portion included in an area that contacts with the ground during cornering. Therefore, a stiffness in the tire circumferential direction is enhanced in the middle portion, and traction performance is enhanced even during cornering. Further, the shoulder band portions having a reduced density of band cords as compared to the middle band portions are disposed in the shoulder portions on the outermost sides of the tread portion. Therefore, even in cornering at or around a maximum camber angle, a flexibility is ensured in the shoulder portions, and contact performance is not deteriorated, thereby maintaining steering stability during cornering.

### BRIEF DESCRIPTION OF THE DRAWINGS

FIG. 1 is a cross-sectional view of a two-wheeled automotive vehicle tire according to one embodiment of the present invention;
FIG. 2 is an enlarged cross-sectional view of a tread portion of the tire shown in FIG. 1; and
FIG. 3 is an enlarged cross-sectional view of a shoulder rubber portion of the tire shown in FIG. 1.

### DESCRIPTION OF THE PREFERRED EMBODIMENTS

Hereinafter, an embodiment of the present invention will be described with reference to the drawings.

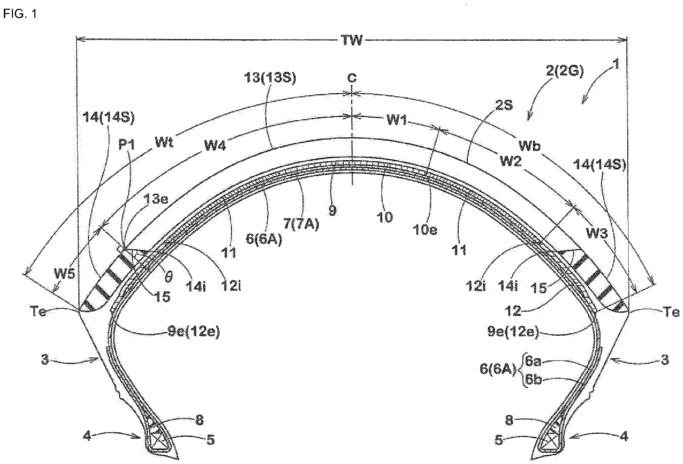

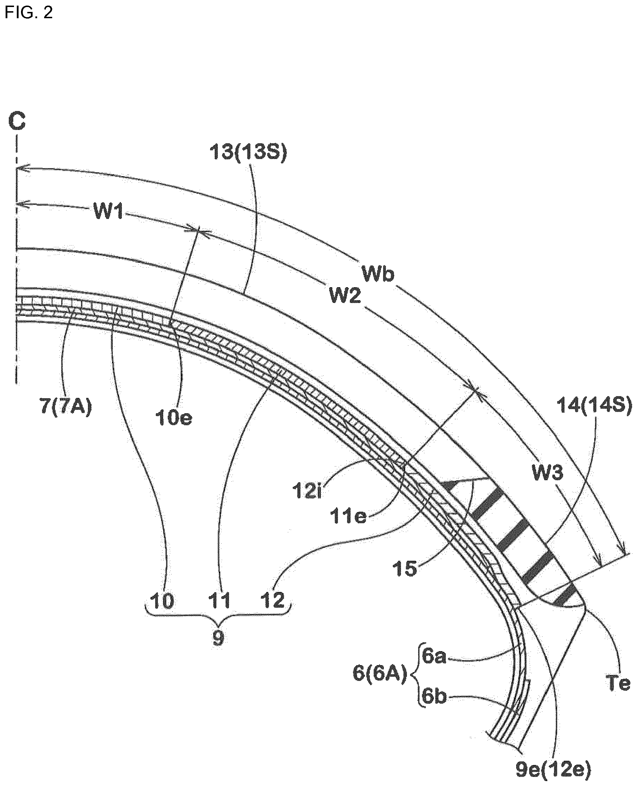

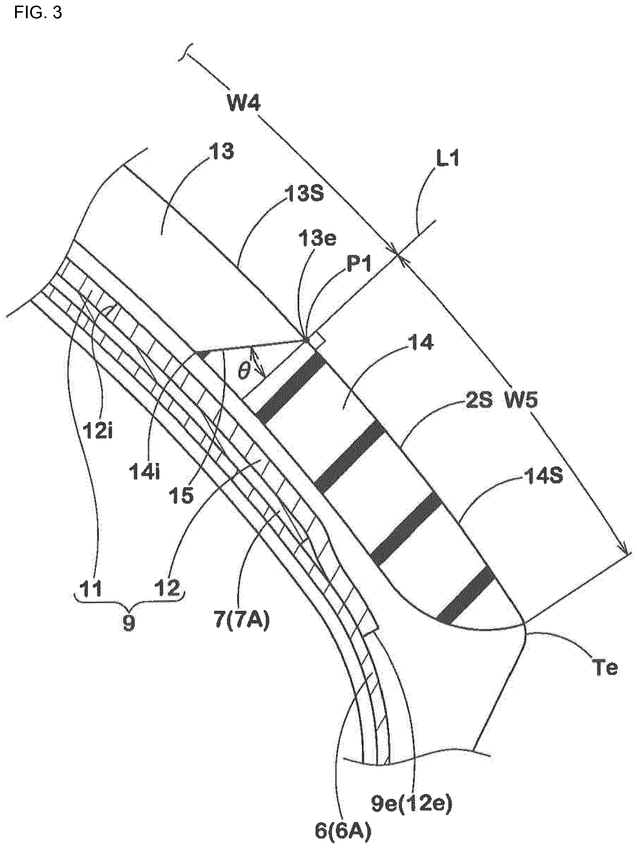

FIG. 1 is a tire-meridian cross-sectional view of a two-wheeled automotive vehicle tire 1, in a normal state, including a tire rotation axis, according to the present embodiment. FIG. 2 and FIG. 3 are each a partially enlarged view of a tread portion.

In the description herein, the normal state represents a state in which a tire is mounted to a normal rim (not shown) and is filled with air at a normal internal pressure, and no load is applied to the tire. Hereinafter, unless otherwise specified, for example, dimensions of components of the tire are represented as values measured in the normal state.

Further, the "normal rim" described above represents a rim that is defined, in a standard system including a standard with which the tire complies, by the standard for each tire, and is, for example, the "standard rim" in the JATMA standard, the "Design Rim" in the TRA standard, or the "Measuring Rim" in the ETRTO standard.

Further, the "normal internal pressure" described above represents an air pressure that is defined, in a standard system including a standard with which the tire complies, by the standard for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

As shown in FIG. 1, the two-wheeled automotive vehicle tire (hereinafter, may be simply referred to as a "tire") 1 of the present embodiment includes: a carcass 6 extending from a tread portion 2 via a sidewall portion 3 to a bead core 5 of a bead portion 4; a belt layer 7 disposed outward of the carcass 6 and inward of the tread portion 2 in the tire radial direction; a band layer 9 disposed outward of the belt layer 7 and inward of the tread portion 2 in the tire radial direction; bead apex rubbers 8 each of which extends outward from the bead core 5 in the tire radial direction so as to be tapered; and a tread rubber 2G disposed outward of the band layer 9.

In order to allow the tread portion 2 to have a sufficient contact area also during cornering in which a camber angle is increased, an outer surface 2S of the tread portion 2 between tread ends Te and Te extends so as to be curved such that the outer surface 2S is convex outward in the tire radial direction and is arc-shaped. Further, a tread width TW that is a distance between the tread ends Te and Te in the tire axial direction, is a tire maximum width.

The carcass 6 is formed as, for example, a single carcass ply 6A. The carcass ply 6A includes: a body portion 6a extending from the tread portion 2 via the sidewall portion 3 to the bead core 5 embedded in the bead portion 4; and turned-up portions 6b each of which connects to the body portion 6a and is turned up around the bead core 5.

Further, the carcass ply 6A has carcass cords tilted relative to a tire equator C by an angle ranging, for example, from 75° to 90°. For the carcass cords, for example, organic fiber cords made of a nylon, a polyester, a rayon, or the like are favorably used.

In the belt layer 7, a single belt ply 7A having belt cords tilted relative to the tire equator C by an angle ranging, for example, from 75° to 85°, is disposed outward of the carcass 6 in the tire radial direction. For the belt cords, for example, an aramid or a rayon is favorably used.

The bead apex rubbers 8 are formed of a hard rubber, and are disposed between the body portion 6a and each turned-up portion 6b, and each extend outward from the bead core 5 in the tire radial direction so as to be tapered. Thus, the bead portion 4 and the sidewall portion 3 are reinforced.

The tread rubber 2G includes: a crown rubber portion 13 disposed in a central region including the tire equator C as its center; and a pair of shoulder rubber portions 14 disposed on both sides lateral to the crown rubber portion 13 in the tire axial direction. An outer surface 13S of the crown rubber portion 13 and outer surfaces 14S of the shoulder rubber portions 14 form the outer surface 2S of the tread portion 2, thereby forming a contact surface. For example, a base rubber layer having a small thickness may be disposed inward of the crown rubber portion 13 and the shoulder rubber portions 14 and outward of the band layer 9.

Each of the shoulder rubber portions 14 of the present embodiment has an inner edge 14i, in the tire axial direction, which is joined to the crown rubber portion 13, and extends so as to have an outer edge, in the tire axial direction, at the tread end Te.

Further, the shoulder rubber portions 14 are formed of a rubber composition having a loss tangent tanδ that is greater than that of the crown rubber portion 13. The shoulder rubber portions 14 thus formed increase heat emission as compared to the crown rubber portion 13, due to, for example, a load and vibration during running, to enhance grip performance in the tire lateral direction during cornering, thereby enhancing cornering performance.

In the description herein, the loss tangent tanδ represents a value measured by a viscoelasticity spectrometer manufactured by Iwamoto Seisakusho, in compliance with the standard of JIS-K6394 which widely corresponds to ISO 4664, e.g. under the following conditions.
Initial strain: 10%
Amplitude: ±1%
Frequency: 10 Hz
Deformation mode: tension
Measurement temperature: 70°

When the loss tangent tanδs of the shoulder rubber portions 14 is small, sufficient enhancement of grip performance during cornering may not be expected. On the other hand, when the loss tangent tanδs of the shoulder rubber portions 14 is great, although the grip performance is enhanced, heat emission is increased, so that performance during cornering may be early deteriorated due to a so-called thermal degradation. In this viewpoint, the loss tangent tanδs of the shoulder rubber portions 14 is preferably greater than or equal to 0.21, and is more preferably greater than or equal to 0.22, and is preferably not greater than 0.27, and is more preferably not greater than 0.26.

Further, when a difference between a loss tangent tanδc of the crown rubber portion 13 and the loss tangent tanδs of the shoulder rubber portions 14 is great, transient characteristics represent an abrupt transition from straight running to cornering, so that steering stability may be deteriorated. In this viewpoint, a ratio tanδs/tanδc of the loss tangent tanδs of the shoulder rubber portions 14 to the loss tangent tanδc of the crown rubber portion 13 is greater than 1, and is preferably less than or equal to 1.10, and is more preferably less than or equal to 1.08.

Increase of a developed length of the crown rubber portion 13 leads to reduction of a contact area of the shoulder rubber portions 14, so that cornering performance may be deteriorated at or around such a great camber angle that the tread end Te contacts with the ground. On the other hand, reduction of a developed length of the crown rubber portion 13 leads to increase of a developed length of the shoulder rubber portions 14, so that, although grip performance in the tire lateral direction is improved during cornering, a stiffness in the tire circumferential direction is reduced during straight running, and sufficient traction performance may not be obtained. In this viewpoint, half a crown rubber developed width W4 which is a developed length of the crown rubber portion 13 of the outer surface 2S of the tread portion 2, from the tire equator C to an outer edge 13e, in the tire axial direction, is preferably greater than or equal to 60% of half a tread developed width Wt which is a developed length from the tire equator C to the tread end Te, and is more preferably greater than or equal to 65% thereof, and is preferably not greater than 80% thereof, and is more preferably not greater than 75% thereof.

In a similar viewpoint, a shoulder rubber developed width W5 which is a developed length of the outer surface 14S of each shoulder rubber portion 14 is preferably greater than or equal to 20% of half the tread developed width Wt, and is more preferably greater than or equal to 25% thereof, and is preferably not greater than 40% thereof, and is more preferably not greater than 35% thereof.

As shown in FIG. 1 to FIG. 3, in the tire meridian cross-section including the tire rotation axis, a junction surface 15 between the crown rubber portion 13 and each shoulder rubber portion 14 linearly extends. The junction surface 15 preferably extends outward in the tire radial direction so as to be tilted toward the tread end Te. Thus, the shoulder rubber portions 14 are embedded inside the crown rubber portion 13, and have their rubber volume increased on the tire inner cavity side. This allows the shoulder rubber portions 14 to further contribute to improvement of grip performance in the tire lateral direction. However, the present invention is not limited to the structure of the present embodiment, and the junction surface 15 may extend outward in the tire radial direction so as to be tilted toward the tire equator. In this case, the crown rubber portion 13 has an increased surface on the tire inner cavity side, and therefore traction performance can be improved during cornering in which the shoulder rubber portion 14 contacts with the ground.

Further, when areas at which the two rubber portions 13 and 14 are joined to each other at the junction surface 15, are small, a stiffness of the tread portion 2 is abruptly changed, and transient characteristics during cornering may be deteriorated, and, further, a crack may occur at and from the junction surface 15. Therefore, as shown in FIG. 3, in order to sufficiently ensure an area of the junction surface 15, the junction surface 15 is preferably tilted relative to a tread normal line L1 that extends from an intersection P1 between the junction surface 15 and the outer surface 2S of the tread portion so as to be normal to the outer surface.

When an angle θ between the junction surface 15 and the tread normal line L1 is great, separation of the rubbers may occur due to a load in the tire lateral direction. In this viewpoint, the angle θ is preferably greater than or equal to 15°, and is more preferably greater than or equal to 30°, and is preferably not greater than 75°, and is more preferably not greater than 60°.

As shown in FIG. 2, the band layer 9 is formed as a single band ply 9A in the present embodiment. Further, the band ply 9A has band cords tilted relative to the tire circumferential direction by an angle less than or equal to 5°.

The band ply 9A is formed as a so-called jointless band ply formed such that a band-like rubber strip that has a reduced width and includes a single band cord or a plurality of band cords helically wound outward of the carcass 6 in the tire radial direction, in the present embodiment.

As shown in FIG. 2, the band ply 9A includes a crown band portion 10, middle band portions 11, and shoulder band portions 12. The crown band portion 10 is disposed in a central region, of the tread portion 2, which includes the tire equator C as its center. Further, the shoulder band portions 12 are disposed on both outer sides, respectively, of the band layer 9, and include outer ends 9e, in the tire axial direction, of the band layer 9. Further, the middle band portions 11 are disposed between the crown band portion 10 and the shoulder band portions 12, respectively.

The same band cord is used for the crown band portion 10, the middle band portions 11, and the shoulder band portions 12 in the present embodiment. However, the density thereof is adjusted. The density is represented the number of band cords per a width of 5 cm of the band ply 9A, and a stiffness of the band ply 9A in the tire circumferential direction, that is, a stiffness of the tread portion 2 in the tire circumferential direction is adjusted by changing the density. The density or number of band cords is defined by counting ends of band cords of the band ply 9A in a perpendicular section to a longitudinal direction of the band cords per a ply width of 5 cm. The ends can be changed by changing a pitch for the winding described above.

In the present invention, each middle band portion 11 has the ends increased as compared to the crown band portion 10 and the shoulder band portions 12. In the two-wheeled automotive vehicle tire, according to the present invention, having the band ply 9A thus formed, ride comfort is maintained during straight running by means of the crown band portion 10 having the ends relatively reduced. Further, during straight running and cornering in which a camber angle is small such that the tire equator C contacts with the ground, the entirety of the tread portion 2 is deformed, and a sufficient contact area is ensured. Further, since the crown rubber portion 13 having the loss tangent tanδ relatively increased is disposed in the central region of the tread portion 2, deterioration of traction performance due to reduction of the ends of the crown band portion 10 does not cause a problem..

Further, the middle band portions 11 having the ends relatively increased are disposed inward, in the tire radial direction, of a middle portion that contacts with the ground during cornering in which a camber angle is gradually increased. Therefore, a stiffness in the tire circumferential direction is enhanced in the middle portion, and traction performance is improved even during cornering. Further, in shoulder portions on the outermost sides of the tread portion 2 in the tire axial direction, the shoulder band portions 12 having the ends reduced as compared to the middle band portions 11 are disposed. Therefore, even during cornering at or around a maximum camber angle, a stiffness in the tire circumferential direction near the tread end Te can be prevented from being excessively increased, and steering stability during cornering at or around the maximum camber angle is improved.

When a developed length of the crown band portion 10 is small, ride comfort may be deteriorated during straight running. On the other hand, when the developed length thereof is great, traction performance may be deteriorated during cornering. In this viewpoint, in the tire-meridian cross-section including the tire rotation axis, half a crown band developed width W1 which is a developed length from the tire equator C to an outer edge 10e of the crown band portion 10 in the tire axial direction, is preferably greater than or equal to 20% of half a band developed width Wb which is a developed length from the tire equator C to the outer edge 9e, in the tire axial direction, of the band layer 9, and is more preferably greater than or equal to 24% thereof, and is preferably not greater than 30% thereof, and is more preferably not greater than 26% thereof.

Similarly, when ends Ec of the crown band portion 10 are reduced, a fundamental traction during straight running or durability of the tread portion 2 may be deteriorated. On the other hand, the ends Ec are increased, ride comfort may be deteriorated. In this viewpoint, the ends Ec of the crown band portion 10 are preferably greater than or equal to 25, and are more preferably greater than or equal to 30, and are preferably not greater than 40, and are more preferably not greater than 35.

When a developed length of the middle band portions 11 is small, a range of the camber angles at which the traction performance is improved is narrowed, so that sufficient improvement in steering stability cannot be expected. On the other hand, when the developed length thereof is great, a weight of the tire is increased or lightness of leaning the tire may be reduced. In this viewpoint, a middle band developed width W2 which is a developed length from the outer edge 10e of the crown band portion to an outer edge 11e, in the tire axial direction, of each middle band portion 11, is preferably greater than or equal to 30% of half the band developed width Wb, and is more preferably greater than or equal to 40% thereof, and is preferably not greater than 60% thereof, and is more preferably not greater than 45% thereof.

Further, when a difference between ends Em of the middle band portions 11 and the ends Ec of the crown band portion 10 is small, improvement of traction performance may become difficult. When the difference is great, a stiffness in the tire axial direction is abruptly changed, and an operability for leaning the tire may be deteriorated. In this viewpoint, the ends Em of each middle band portion 11 are preferably greater than or equal to 1.1 times the ends Ec of the crown band portion 10, and are more preferably greater than or equal to 1.15 times the ends Ec, and are preferably not greater than 1.3 times the ends Ec, and are more preferably not greater than 1.25 times the ends Ec.

When a developed length of the shoulder band portions 12 is small, the middle band portion 11 may be positioned so as to be included in a contact surface during cornering at or around a maximum camber angle, so that steering stability may be deteriorated during cornering. On the other hand, when the developed length of the shoulder band portions 12 is great, an operability for raising the tire may be deteriorated in cornering at or around a maximum camber angle. In this viewpoint, a shoulder band developed width W3 that is a developed length from an inner edge 12i to an outer edge 12e, in the tire axial direction, of each shoulder band portion 12, is preferably greater than or equal to 20% of half the band developed width, and is more preferably greater than or equal to 25% thereof, and is preferably not greater than 40% thereof, and is more preferably not greater than 35% thereof.

A slip rate is enhanced near the tread end Te in cornering at or around a maximum camber angle, and an uneven wear is likely to occur. Therefore, each shoulder band portion 12 is preferably extended to the vicinity of the tread end Te. In this viewpoint, the outer edge 12e on the outer side of each shoulder band portion 12 in the tire axial direction is preferably positioned inward, in the tire radial direction, of a tire axial direction line that passes through the tread end Te.

When ends Es of the shoulder band portions 12 are excessively reduced, traction performance is not sufficient, and an operability for raising the tire in cornering at a maximum camber angle may be deteriorated, and an uneven wear may occur in the tread end portion. On the other hand, when the ends Es of the shoulder band portions 12 are excessively increased, a stiffness in the tire circumferential direction is excessively increased near the tread ends Te, and a behavior for starting sliding of the tire for cornering is abruptly performed, to deteriorate contact performance, so that steering stability may be deteriorated during cornering. In this viewpoint, the ends Es of each shoulder band portion 12 are preferably greater than or equal to 0.75 times the ends Em of each middle band portion 11, and are more preferably greater than or equal to 0.8 times the ends Em, and are preferably not greater than 0.9 times the ends Em, and are more preferably not greater than 0.85 times the ends Em.

There is not any specific relationship between the ends Es of the shoulder band portions 12 and the ends Ec of the crown band portion 10. However, in order to approximate a contact performance during straight running and a contact performance at a maximum camber angle to each other, the ends Es of each shoulder band portion 12 are preferably set so as to be 0.97 to 1.03 times the ends Ec of the crown band portion 10.

In the tire 1 of the present embodiment, since the tread portion 2 has disposed therein the crown rubber portion 13 and the shoulder rubber portions 14 that are different in loss tangent tanδ from each other, a stiffness in the tire axial direction is changed at the junction surface 15. However, if a distribution in stiffness of the tread portion 2 in the tire axial direction is abruptly changed, an operability for leaning the tire may be deteriorated. Therefore, the inner edge 14i (in other words, the junction surface 15), in the tire axial direction, of each shoulder rubber portion 14 is preferably not disposed on a tread normal line that extends from the inner edge 12i, in the tire axial direction, of the shoulder band portion 12 so as to be normal to the tread.

Further, the inner edge 12i of each shoulder band portion 12 is preferably positioned so as to be closer to the tire equator C than the inner edge 14i, in the tire axial direction, of each shoulder rubber portion 14. Thus, change of distribution in stiffness of the tread portion 2 in the tire axial direction is alleviated, and an operability for leaning the tire at a camber angle is improved.

Further, the inner edge 12i of each shoulder band portion 12 may be positioned so as to be closer to the tread end Te than the inner edge 14i, in the tire axial direction, of each shoulder rubber portion 14. Thus, the shoulder rubber portions 14 and the middle band portions 11 partially overlap each other. Therefore, when the tire is raised in cornering at a maximum camber angle, increased traction can be quickly applied.

Although the preferred embodiment of the present invention has been described above in detail, the present invention is not limited to the embodiment described above with reference to the drawings, and various modifications can be devised to implement the present invention.

### [Examples]

Rear tires, for use in two-wheeled automotive vehicles, having the fundamental structure shown in FIG. 1, and based on the specifications indicated in table 1, were manufactured, and tests for performance thereof were made. Further, tests for a tire of comparative example in which a band layer had constant ends and a tread rubber had a constant loss tangent were similarly made for comparison. The common specifications are as follows.
Tire size:
   Front tire: 120/70ZR17
   Rear tire: 180/55ZR17
Rim size:
   Front rim: MT3.50
   Rear rim: MT5.50
Internal pressure:
   Front tire: 200 kPa
   Rear tire: 200 kPa

The test methods are as follows.

### <Traction performance, cornering performance, leaning performance, ride comfort>

Each test tire was mounted to a rear wheel of a two-wheeled automotive vehicle having an engine displacement of 600 cc, and test running was performed in a 3700 m long circuit, and sensory evaluations as to "traction performance", "cornering performance", "leaning performance", and "ride comfort" were made by a test rider. The results are indicated as scores on the assumption that scores obtained in comparative example are each 100. The greater a value of the score is, the more favorable the result is. Further, contents of the evaluation for each performance or the like are as indicated below.
Traction performance: Sensory evaluation as to stiffness in the tire circumferential direction, at such a camber angle as to cause contact of a middle band portion with the ground.
Cornering performance: Evaluation as to a magnitude of a cornering force at a maximum camber angle
Leaning performance: Evaluations as to steering stability and contact performance obtained when the tire was leaned at a maximum camber angle from a straight running state
Ride comfort: Evaluation as to ride comfort during straight running

The test results are indicated in table 1.

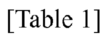

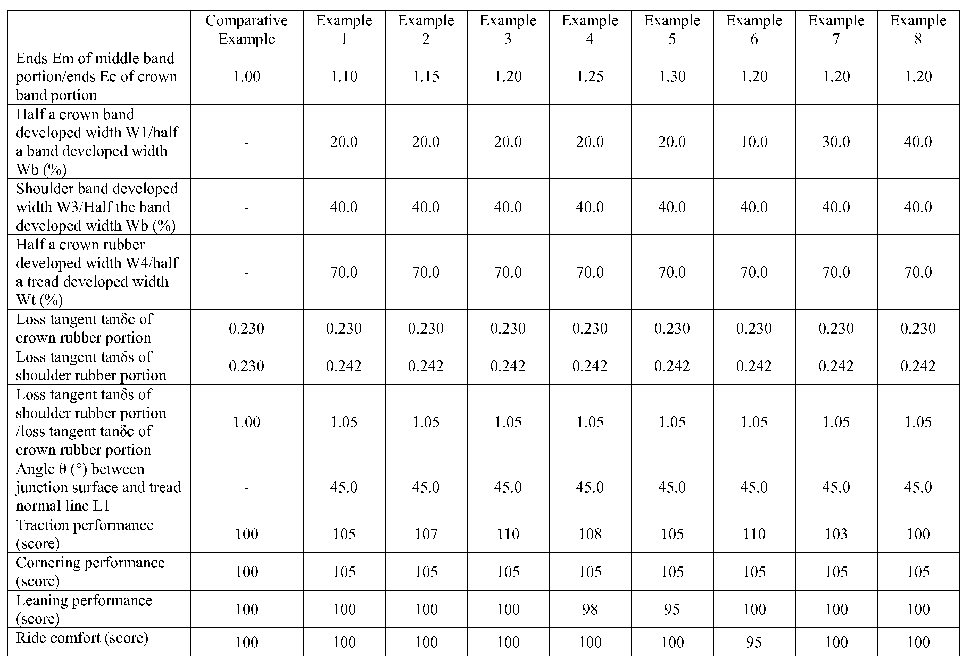

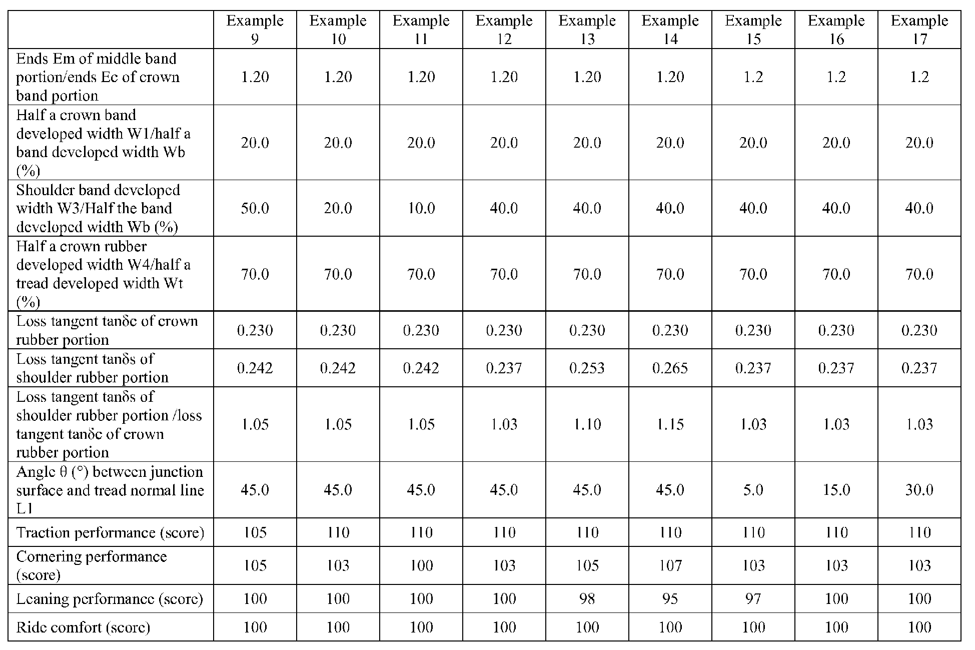

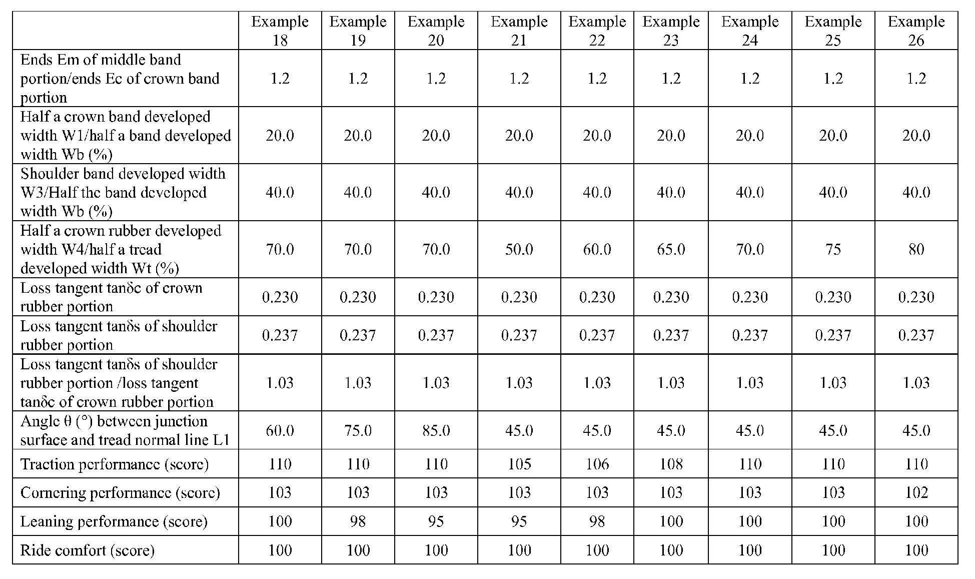

According to the test results, it is confirmed that the two-wheeled automotive vehicle tires of examples enable grip performance and traction performance during cornering to be significantly enhanced while maintaining ride comfort and steering stability in leaning the tires.

A two-wheeled automotive vehicle tire is provided that enables enhancement of both grip performance and traction performance during cornering while maintaining ride comfort and steering stability.

In the two-wheeled automotive vehicle tire, a tread portion (2) includes a carcass (6) and a band layer (9), and an outer surface (2S) of the tread portion (2) extends so as to be curved and arc-shaped. The band layer (9) includes: a crown band portion (10) disposed in a central region; a pair of shoulder band portions (12); and a pair of middle band potions (11) disposed between the crown band portion (10) and the shoulder band portions (12), respectively. The middle band portions (11) each have a density of band cord(s) which is increased as compared to a density of band cord(s) of each of the crown band portion (10) and the shoulder band portions (12). The tread rubber (2G) includes a crown rubber portion (13) disposed in a central region, and a pair of shoulder rubber portions (14) having a loss tangent tanδ that is greater than that of the crown rubber portion (13).

## Claims

1. A two-wheeled automotive vehicle tire (1) that includes a tread portion (2) which has an outer surface (2S) extending so as to be curved such that the outer surface (2S) is convex outward in a tire radial direction and is arc-shaped, the two-wheeled automotive vehicle tire (1) comprising:
a carcass (6) extending from the tread portion (2) via a sidewall portion (3) to a bead core (5) of a bead portion (4);
a band layer (9) disposed outward of the carcass (6) and inward of the tread portion (2) in the tire radial direction; and
a tread rubber (2G) disposed outward of the band layer (9), wherein
the tread rubber (2G) includes; a crown rubber portion (13) disposed in a central region including a tire equator (C) as a center thereof; and a pair of shoulder rubber portions (14) extending to tread ends (Te) on both sides lateral to the crown rubber portion (13) in a tire axial direction, and having a loss tangent tanδ that is greater than that of the crown rubber portion (13), **characterized in that**
the band layer (9) formed as a band ply (9A) in which (a) band cord(s) is/are tilted relative to a tire circumferential direction by an angle less than or equal to 5°, and
the band ply (9A) includes: a crown band portion (10) disposed in a central region including the tire equator (C) as a center thereof; a pair of shoulder band portions (12) disposed on both outer sides so as to include both ends (9e), in the tire axial direction, of the band layer (9); and a pair of middle band portions (11) disposed between the crown band portion (10) and the shoulder band portions (12), respectively; and
the middle band portions (11) each have a density of band cord(s) which is increased as compared to a density of band cord(s) of each of the crown band portion (10) and the shoulder band portions (12), wherein the density of band cord(s) is represented by the number of the band cords per a ply width of 5 cm.

2. The two-wheeled automotive vehicle tire according to claim 1, wherein
in a tire-meridian cross-section including a tire rotation axis,
half a crown band developed width (W1) representing a developed length from the tire equator (C) to an outer edge (10e), in the tire axial direction, of the crown band portion (10) ranges from 20% of half a band developed width (Wb) representing a developed length from the tire equator (C) to an outer edge (9e), in the tire axial direction, of the band layer (9), to 30% thereof, and
a shoulder band developed width (W3) representing a developed length from an inner edge (12i) of each shoulder band portion (12) in the tire axial direction, to an outer edge (12e) thereof ranges from 20% of half the band developed width (Wb) to 40% thereof.

3. The two-wheeled automotive vehicle tire according to claim 1 or 2, wherein the density of band cords of each middle band portion (11) range from 1.1 times the density of band cords of the crown band portion (10) to 1.3 times the density of band cords of the crown band portion (10).

4. The two-wheeled automotive vehicle tire according to one of claims 1 to 3, wherein a ratio tanδs/tanδc of a loss tangent tanδs of each shoulder rubber portion (14) to a loss tangent tanδc of the crown rubber portion (13) is greater than 1, and is less than or equal to 1.10.

5. The two-wheeled automotive vehicle tire according to one of claims 1 to 4, wherein
in the tire-meridian cross-section including the tire rotation axis,
a junction surface (15) between the crown rubber portion (13) and each shoulder rubber portion (14) linearly extends, and
half a crown rubber developed width (W4) representing a developed length from the tire equator (C) to an outer edge (13e), in the tire axial direction, of the crown rubber portion (13) of the outer surface (2S) of the tread portion (2), ranges from 60% of half a tread developed width (Wt) representing a developed length from the tire equator (C) to each tread end (Te), to 80% thereof.

6. The two-wheeled automotive vehicle tire according to claim 5, wherein an angle θ ranges from 15° to 75°, and the angle θ represents an angle between the junction surface (15) and a line which extends from an intersection between the junction surface (15) and the outer surface (2S) of the tread portion (2) so as to be normal to the tread portion (2).

7. The two-wheeled automotive vehicle tire according to claim 5, wherein the inner edge (12i), in the tire axial direction, of each shoulder band portion (12) is positioned so as to be closer to the tread end (Te) than an inner edge (14i), in the tire axial direction, of each shoulder rubber portion (14).

## Patentansprüche

1. Reifen (1) für ein zweirädriges selbstfahrendes Fahrzeug, der einen Profilabschnitt (2) aufweist, der eine äußere Fläche (2S) hat, die sich so erstreckt, dass sie derart gekrümmt ist, dass die äußere Fläche (2S) in einer radialen Reifenrichtung auswärts konvex ist und bogenförmig ist, wobei der Reifen (1) für das zweirädrige selbstfahrende Fahrzeug aufweist:
eine Karkasse (6), die sich von dem Profilabschnitt (2) über einen Seitenwandabschnitt (3) zu einem Wulstkern (5) eines Wulstabschnitts (4) erstreckt;
eine Bandschicht (9), die in der radialen Reifenrichtung außerhalb der Karkasse (6) und innerhalb des Profilabschnitts (2) angeordnet ist; und
ein Profilgummi (2G), das außerhalb der Bandschicht (9) angeordnet ist, wobei
das Profilgummi (2G) einen Kronengummiabschnitt (13), der in einem zentralen Bereich einschließlich eines Reifenäquators (C) als dessen Mitte angeordnet ist, und ein Paar Schultergummiabschnitte (14) aufweist, die sich zu Profilenden (Te) an beiden Seiten lateral zu dem Kronengummiabschnitt (13) in einer axialen Reifenrichtung erstrecken, und die eine Verlusttangente (tanδ) haben, die größer als die des Kronengummiabschnitts (13) ist, **dadurch gekennzeichnet, dass**
die Bandschicht (9) als eine Bandlage (9A) ausgebildet ist, in welcher ein Bandfaden (Bandfäden) relativ zu einer Reifenumfangsrichtung um einen Winkel von kleiner als oder gleich wie 5° geneigt ist/sind, und
die Bandlage (9A) Folgendes aufweist: einen Kronenbandabschnitt (10), der in einem Zentralbereich einschließlich des Reifenäquators (C) als dessen Mitte angeordnet ist; ein Paar Schulterbandabschnitte (12), die an beiden äußeren Seiten angeordnet sind, sodass sie beide Enden (9e), in der axialen Reifenrichtung, der Bandschicht (9) aufweisen, und ein Paar mittlerer Bandabschnitte (11), die jeweils zwischen dem Kronenbandabschnitt (10) und den Schulterbandabschnitten (12) angeordnet sind; und
die mittleren Bandabschnitte (11) jeweils eine Dichte des Bandfadens (der Bandfäden) haben, die verglichen mit einer Dichte des Bandfadens (der Bandfäden) eines jeden von dem Kronenbandabschnitt (10) und den Schulterbandabschnitten (12) erhöht ist, wobei die Dichte des Bandfadens (der Bandfäden) durch die Anzahl der Bandfäden je Lagenbreite von 5 cm wiedergegeben wird.

2. Reifen für ein zweirädriges, selbstfahrendes Fahrzeug gemäß Anspruch 1, wobei
in einem Reifenmeridianquerschnitt, der eine Reifenrotationsachse aufweist,
eine Hälfte einer Kronenbandabwicklungsbreite (W1), die eine abgewickelte Länge von dem Reifenäquator (C) zu einer Außenkante (10e), in der axialen Reifenrichtung, des Kronenbandabschnitts (10) wiedergibt, von 20 % der Hälfte einer Bandabwicklungsbreite (Wb), die eine abgewickelte Länge von dem Reifenäquator (C) zu einer äußeren Kante (9e), in der axialen Reifenrichtung, der Bandschicht (9) wiedergibt, bis 30 % davon reicht, und
eine Schulterbandabwicklungsbreite (W3), die eine abgewickelte Länge von einer inneren Kante (12i) eines jeden Schulterbandabschnitts (12) in der axialen Reifenrichtung zu einer äußeren Kante (12e) davon wiedergibt, von 20 % der Hälfte der Bandabwicklungsbreite (Wb) bis 40 % davon reicht.

3. Reifen für ein zweirädriges, selbstfahrendes Fahrzeug gemäß Anspruch 1 oder 2, wobei die Dichte der Bandfäden eines jeden mittleren Bandabschnitts (11) von 1,1-mal der Dichte der Bandfäden des Kronenbandabschnitts (10) bis 1,3-mal der Dichte der Bandfäden des Kronenbandabschnitts (10) reicht.

4. Reifen für ein zweirädriges, selbstfahrendes Fahrzeug gemäß einem der Ansprüche 1 bis 3, wobei ein Verhältnis tanδs/tanδc einer Verlusttangente tanδs eines jeden Schultergummiabschnitts (14) zu einer Verlusttangente tanδc des Kronengummiabschnitts (13) größer als 1 ist und kleiner als oder gleich wie 1,10 ist.

5. Reifen für ein zweirädriges, selbstfahrendes Fahrzeug gemäß einem der Ansprüche 1 bis 4, wobei
in dem Reifenmeridianquerschnitt, der die Reifenrotationsachse aufweist,
eine Anschlussfläche (15) sich zwischen dem Kronengummiabschnitt (13) und jedem Schultergummiabschnitt (14) linear erstreckt, und
eine Hälfte einer Kronengummiabwicklungsbreite (W4), die eine abgewickelte Länge von dem Reifenäquator (C) zu einer äußeren Kante (13e), in der axialen Reifenrichtung, des Kronengummiabschnitts (13) der äußeren Fläche (2S) des Profilabschnitts (2) wiedergibt, von 60 % einer Hälfte einer Profilabwicklungsbreite (Wt), die eine abgewickelte Länge von dem Reifenäquator (C) zu jedem Profilende (Te) wiedergibt, bis 80 % davon reicht.

6. Reifen für ein zweirädriges, selbstfahrendes Fahrzeug gemäß Anspruch 5, wobei ein Winkel θ von 15° bis 75° reicht, und der Winkel θ einen Winkel zwischen der Anschlussfläche (15) und einer Linie wiedergibt, die sich von einer Schnittstelle zwischen der Anschlussfläche (15) und der äußeren Fläche (2S) des Profilabschnitts (2) erstreckt, sodass sie bezüglich des Profilabschnitts (2) senkrecht ist.

7. Reifen für ein zweirädriges, selbstfahrendes Fahrzeug gemäß Anspruch 5, wobei die innere Kante (12i), in der axialen Reifenrichtung, eines jeden Schulterbandabschnitts (12) so positioniert ist, dass sie näher an dem Profilende (Te) als eine innere Kante (14i), in der axialen Reifenrichtung, eines jeden Schultergummiabschnitts (14) ist.

## Revendications

1. Pneu (1) de véhicule automobile à deux roues qui comprend une partie de bande de roulement (2) qui a une surface externe (2S) s'étendant afin d'être incurvée de sorte que la surface externe (2S) est convexe vers l'extérieur dans une direction radiale de pneu et est en forme d'arc, le pneu (1) de véhicule automobile à deux roues comprenant :
une carcasse (6) s'étendant à partir de la partie de bande de roulement (2) via une partie de paroi latérale (3) jusqu'à une tringle (5) d'une partie de talon (4) ;
une couche de bande (9) disposée vers l'extérieur de la carcasse (6) et vers l'intérieur de la partie de bande de roulement (2) dans la direction radiale de pneu ; et
un caoutchouc de bande de roulement (2G) disposé vers l'extérieur de la couche de bande (9), dans lequel :
le caoutchouc de bande de roulement (2G) comprend : une partie de caoutchouc de sommet (13) disposée dans une région centrale comprenant un équateur de pneu (C) au niveau de son centre ; et une paire de parties de caoutchouc d'épaulement (14) s'étendant vers les extrémités de bande de roulement (Te) des deux côtés latéraux de la partie de caoutchouc de sommet (13) dans une direction axiale de pneu, et ayant une tangente de perte tanδ qui est supérieure à celle de la partie de caoutchouc de sommet (13), **caractérisé en ce que** :
la couche de bande (9) est formée comme une épaisseur de bande (9A) dans laquelle (a) une corde (des cordes) de bande est/sont inclinée(s) par rapport à une direction circonférentielle de pneu par un angle inférieur ou égal à 5°, et
l'épaisseur de bande (9A) comprend : une partie de bande de sommet (10) disposée dans une région centrale comprenant l'équateur de pneu (C) au titre de son centre ; une paire de parties de bande d'épaulement (12) disposées sur deux côtés externes afin de comprendre les deux extrémités (9e), dans la direction axiale de pneu, de la couche de bande (9) ; et une paire de parties de bande centrales (11) disposées entre la partie de bande de sommet (10) et les parties de bande d'épaulement (121), respectivement ; et
les parties de bande centrales (11) ont chacune une densité de corde (s) de bande qui est accrue par rapport à une densité de corde(s) de bande de chacune parmi la partie de bande de sommet (10) et les parties de bande d'épaulement (12), dans lequel la densité de corde(s) de bande est représentée par le nombre de cordes de bande par une largeur d'épaisseur de 5 cm.

2. Pneu de véhicule automobile à deux roues selon la revendication 1, dans lequel :
dans une section transversale méridienne du pneu comprenant un axe de rotation de pneu,
la moitié d'une largeur développée de bande de sommet (W1) représentant une longueur développée de l'équateur du pneu (C) jusqu'à un bord externe (10e), dans la direction axiale du pneu, de la partie de bande de sommet (10) est dans une plage de 20 % de la moitié d'une largeur développée de bande (Wb) représentant une longueur développée de l'équateur du pneu (C) jusqu'à un bord externe (9e), dans la direction axiale du pneu, de la couche de bande (9), à 30 %, et
une largeur développée de bande d'épaulement (W3) représentant une longueur développée à partir d'un bord interne (12i) de chaque partie de bande d'épaulement (12) dans la direction axiale du pneu, à son bord externe (12e) est dans une plage de 20 % de la moitié de la largeur développée de bande (Wb) à 40 %.

3. Pneu de véhicule automobile à deux roues selon la revendication 1 ou 2, dans lequel la densité des cordes de bande de chaque partie de bande centrale (11) représente 1,1 fois la densité des cordes de bande de la partie de bande de sommet (10) à 1,3 fois la densité des cordes de bande de la partie de bande de sommet (10).

4. Pneu de véhicule automobile à deux roues selon l'une des revendications 1 à 3, dans lequel un rapport tanδs/tanδc d'une tangente de perte tanδs de chaque partie de caoutchouc d'épaulement (14) sur une tangente de perte tanδc de la partie de caoutchouc de sommet (13) est supérieur à 1, et est inférieur ou égal à 1,10.

5. Pneu de véhicule automobile à deux roues selon l'une quelconque des revendications 1 à 4, dans lequel :
dans la section transversale méridienne du pneu comprenant l'axe de rotation de pneu,
une surface de jonction (15) entre la partie de caoutchouc de sommet (13) et chaque partie de caoutchouc d'épaulement (14) s'étend de manière linéaire, et
la moitié d'une largeur développée de caoutchouc de sommet (W4) représentant une longueur développée à partir de l'équateur du pneu (C) jusqu'à un bord externe (13e), dans la direction axiale du pneu, de la partie de caoutchouc de sommet (13) de la surface externe (2S) de la partie de bande de roulement (2), est dans une plage de 60 % de la moitié d'une largeur développée de bande de roulement (Wt) représentant une longueur développée à partir de l'équateur du pneu (C) jusqu'à chaque extrémité de bande de roulement (Te), à 80 %.

6. Pneu de véhicule automobile à deux roues selon la revendication 5, dans lequel un angle θ est dans une plage de 15° à 75° et l'angle θ représente un angle entre la surface de jonction (15) et une ligne qui s'étend à partir d'une intersection entre la surface de jonction (15) et la surface externe (2S) de la partie de bande de roulement (2) afin d'être normale par rapport à la partie de bande de roulement (2).

7. Pneu de véhicule automobile à deux roues selon la revendication 5, dans lequel le bord interne (12i), dans la direction axiale du pneu, de chaque partie de bande d'épaulement (12) est positionné afin d'être plus à proximité de l'extrémité de bande de roulement (Te) que d'un bord interne (14i), dans la direction axiale du pneu, de chaque partie de caoutchouc d'épaulement (14).
